# EUROPEAN PATENT SPECIFICATION

(11) **EP 3 604 489 B1**
(45) Date of publication and mention of the grant of the patent: **10.12.2025**
(21) Application number: 18729722.1
(22) Date of filing: 22.03.2018
(51) Int. Cl.: C11B 1/00, A23D 7/00

(54) **EXTRACTION PROCEDURE OF OLIVE OIL WITH HIGH CONTENT IN ANTIOXIDANTS**
EXTRAKTIONSVERFAHREN FÜR OLIVENÖL MIT HOHEM GEHALT AN ANTIOXIDANTIEN
PROCEDURE D'EXTRACTION D'HUILE D'OLIVE A HAUTE TENEUR EN ANTIOXYDANTS

(30) Priority: 29.03.2017 ES 201730461
(43) Date of publication of application: 05.02.2020
(73) Proprietor: Tozara Partners, S.L., 28046 Madrid (ES)
(72) Inventor: FALCÓ Y FERNÁNDEZ DE CÓRDOBA, Carlos, 28620 Aldea del Fresno (Madrid) (ES); MUGELLI, Marco, 28620 Aldea del Fresno (Madrid) (ES)
(74) Representative: Pons Ariño, Angel
(86) International application number: PCT/ES2018/070221
(87) International publication number: WO 2018/178449

(56) References cited:
- WO-A1-01/83654
- WO-A1-2008/122320
- WO-A1-2014/154914
- MARIA LISA CLODOVEO: "An overview of emerging techniques in virgin olive oil extraction process: strategies in the development of innovative plants", JOURNAL OF AGRICULTURAL ENGINEERING, vol. 44, no. 2s, 6 September 2013 (2013-09-06), XP055490416, ISSN: 1974-7071, DOI: 10.4081/jae.2013.s2.e60
- GIOVACCHINO DI L ET AL: "INFLUENCE OF OLIVE PROCESSING ON VIRGIN OLIVE OIL QUALITY", EUROPEAN JOURNAL OF LIPID SCIENCE AND TECHNOLOGY, WILEY VCH VERLAG, WEINHEIM, DE, vol. 104, no. 9/10, 1 September 2002 (2002-09-01), pages 587 - 601, XP001130399, ISSN: 1438-7697, DOI: 10.1002/1438-9312(200210)104:9/10<587::AID-EJLT587>3.0.CO;2-M
- MARIA LISA CLODOVEO ET AL: "Mechanical Strategies to Increase Nutritional and Sensory Quality of Virgin Olive Oil by Modulating the Endogenous Enzyme Activities : VOO equipment and endogenous enzymes...", COMPREHENSIVE REVIEWS IN FOOD SCIENCE AND FOOD SAFETY, vol. 13, no. 2, 21 February 2014 (2014-02-21), US, pages 135 - 154, XP055490421, ISSN: 1541-4337, DOI: 10.1111/1541-4337.12054
- RAHELE GHANBARI ET AL: "Valuable Nutrients and Functional Bioactives in Different Parts of Olive (Olea europaea L.)-A Review", INTERNATIONAL JOURNAL OF MOLECULAR SCIENCES, vol. 13, no. 12, 12 December 2012 (2012-12-12), pages 3291 - 3340, XP055109615, ISSN: 1661-6596, DOI: 10.3390/ijms13033291

## Description

### OBJECT OF THE INVENTION

The present invention falls under the technical field of production of fatty acids from raw materials, especially those methods based on the pressing of raw materials, and relates particularly to an extraction method that prevents the loss of antioxidants inherent to the unsaponifiable fraction of extra virgin olive oil, which gives rise to an olive oil with a high antioxidant content.

The invention is defined by appended claim 1.

### BACKGROUND OF THE INVENTION

Pursuant to Regulation (EC) 1234/2007, whereby a common organization of agricultural markets is created and which establishes specific provisions for certain agricultural products, virgin olive oils are considered to be those obtained from the fruits of the olive tree exclusively by mechanical means or other physical methods applied in conditions that exclude any alteration of the product and which have not been subjected to any treatment other than the washing, decantation, centrifugation or filtration thereof.

Among these, extra virgin olive oil (EVOO) is considered to be virgin olive oil with a maximum free acidity, expressed as oleic acid, of 0.8 g per 100 g, and whose other characteristics fulfil those established for this category. This type of oil is of the highest quality and is obtained directly from olives in good condition only by mechanical methods, with an impeccable flavour and odour and free of defects, and whose degree of acidity cannot exceed 0.8º, expressed as a percentage of free oleic acid.

In addition to its culinary qualities, the beneficial properties of virgin olive oils for cosmetic treatments, especially for hair and skin, are well known. Said properties are derived mainly from the high antioxidant content of this type of oil. Antioxidants are considered to be a group of molecules capable of slowing or preventing the oxidation of other molecules. Furthermore, oxidation is a chemical reaction of electron transfer from a substance to an oxidizing agent, which can generate free radicals that trigger chain reactions that damage the cells and which may therefore be harmful.

Similarly, it is currently known that some specific olive varieties have very high antioxidant content, essentially composed of different polyphenols, tocopherols (vitamin E) and squalene. All these antioxidants are found in the unsaponifiable fraction of the oil, which accounts for approximately 1-2% of antioxidant content in the EVOO obtained from said olives. Olive antioxidant content depends on a plurality of factors including, namely:
- The genetic potential of the variety, mentioned earlier.
- The maturity phase: As the olive initiates its natural maturity process, including ripening (change in colour from green to purple and finally to black), there is a significant and increasing loss of the biophenol and other antioxidant content thereof.
- Pruning management: In irrigated olive groves it is essential to practice pruning that enables the most uniform possible penetration of sunlight to all the leaves and fruits thereof, since certain light fractions are responsible for the formation of biophenols in the fruits.
- Drip irrigation management: The irrigation dose applied contributes to a higher antioxidant content in olives by controlling water stress in olive trees during all their vegetation phases and especially during the critical polyphenol formation period (July-September).
- Transport and extraction methods: In current industrial oil mills, these times vary widely in accordance with daily harvest volumes, but are normally at levels comprised between a minimum of 3 hours and a maximum of 24 hours.

As mentioned earlier, during the natural olive maturation process there is a significant loss of those antioxidants, whose destruction continues in harvesting or storage processes. More specifically, the greatest loss of antioxidants contained by the unsaponifiable fraction of EVOO, which can destroy up to 95-97% of its initial content, occurs during extraction of its oil, using both traditional methods and if said extraction is performed using current and advanced industrial processes.

Said current industrial olive oil extraction methods basically comprise four phases: selection and cleaning of the olives, mechanical milling, beating and separation of the oil by centrifugation, achieving high production yields of up to 200 kg of oil per tonne of olives.

WO2008/122320 discloses a method for the preservation of olive oil which consists of freezing and/or vacuum-packing the paste directly obtained from ground olives. For obtaining olive oil, the olive paste is then emulsified or stirred, and extracted through centrifugation.

### DESCRIPTION OF THE INVENTION

The object of the invention consists of an olive oil extraction method that makes it possible to obtain an oil with high antioxidant content, preventing the losses that occur during current conventional extraction methods, maintaining in turn organoleptic parameters similar to those of extra virgin olive oils (EVOOs) resulting from said conventional extraction methods.

To this end, and based mainly on three olive varieties known for their high antioxidant content (Cornicabra, Picual and Arbequina), a series of olive growing methods are firstly executed, aimed at promoting and maintaining said content. Said methods include, namely:
- Plantation framework: Both traditional (from 8x8m to 12x12m) and semi-intensive (200-900 olive trees/ha equipped with surface drip or subsurface irrigation).
- Olive tree pruning management: A goblet or vase shape is preferred, with the aim of achieving an even incidence of light on all the tree's leaves and fruits, regardless of their position thereon.
- Type of terrain: Preferably plantations made on hillsides and sloping terrain, with permeable soils, and at various altitudes and orientations, to achieve staggered harvesting, performed at the optimum qualitative moment of each tree.
- Adequate fertilisation and plague control management, such as for example the Mediterranean fruit fly, which seriously affects olive quality.
- Irrigation system management, aimed at optimising the biophenol and other antioxidant content of the olives, even at the expense of oil yield. This entails moderate water stress in the olive trees in the summer months (July-September).
- Harvest management: To this end, tractors equipped with mechanical trunk shaker and automatically deployed umbrellas are preferably used, which firstly prevent the olives from impacting directly against the ground and, secondly, enable them to be harvested and unloaded directly onto means of transport equipped with a transport box with a maximum capacity of approximately 1,500-2,000 kg. Said load limitation obtains a maximum olive load height of approximately 50 cm, which prevents the fruits from being crushed.
- Management of transport time to the mill: Transport time to the mill should not exceed 30 minutes, which limits the distance of the plots of olive groves from the mill to approximately 20-25 km.

Upon arriving at the mill, the olives thus obtained are subjected to a modified extraction method, which is governed by an external controller that receives information from a plurality of laser digital sensors.

Said method comprises the following stages:
- Selection and cleaning of the olives: The olives are deposited on a vibrating table, whereon operators visually select those with external defects for manual removal. The suitable olives that remain on the table are cleaned by means of air currents generated by fans and are subsequently washed by means of purified water jets that remove any impurities adhered to their surface. Next, the clean olives are dried by means of new hot air jets in order to remove excess moisture from washing, thereby preventing unwanted fermentations and alterations.
- Cutting: The clean olives are subjected to lamination by means of high-precision cutter blades. Said lamination breaks the cell structure of the olives, which will enable simpler extraction of the oil from the olive paste obtained.
- Heating: The olive paste is subjected to moderate, rapid heating inside of vacuum-inertised heat exchangers. During this heating, the temperature is raised to 19-25ºC for a maximum of 10 minutes in order to reduce the viscosity of the paste, finish breaking the cell structure and coagulate the proteins without affecting the antioxidant content.
- Extraction of the EVOO from the paste by means of centrifugation, in high-precision centrifuges or decanters, without adding water, generating pomaces and vegetable waters as by-products. Said separation is based on the difference in density that exists between the three elements (EVOO, pomace, vegetable water). To purify the EVOO obtained after centrifugation, removing the residual vegetable water from the olives, double filtration is performed. Said double filtration preferably comprises a first phase in which the EVOO is forced to pass overpressurised through plates with a predetermined pore size and a second phase in which said EVOO is once again forced to pass through membranes with a pore size that enables the passage of the water molecules but retains the EVOO molecules.
- Preservation and packaging: The EVOO recovered from the final filtration phase is introduced in stainless steel isothermal tanks, inertised with argon gas, and finally transferred to stainless steel container receptacles. Conventional methods normally use Carbon Dioxide or Nitrogen in order to inertise the containers.

The oil thus obtained has a maximum acid content of 0.2 g/100 g, compared to 0.8 g/100 g. Its main characteristic consists of its high antioxidant content, with a minimum of 7,000 mg/kg, of which 800 mg correspond to the sum of biophenols and tocopherols and 6,200 to squalene.

The olive oil extraction method thus described mainly differs from the conventional method, inter alia, in that the phases of mechanical olive milling and beating of the paste obtained are removed, which are those that, according to different studies, give rise to the main risks of loss of antioxidants inherent to olives.

### DESCRIPTION OF THE FIGURES

As a complement to the description being made, and for the purpose of helping to make the characteristics of the invention more readily understandable, in accordance with a preferred practical exemplary embodiment thereof, said description is accompanied by a set of drawings constituting an integral part thereof which, by way of illustration and not limitation, represent the following:

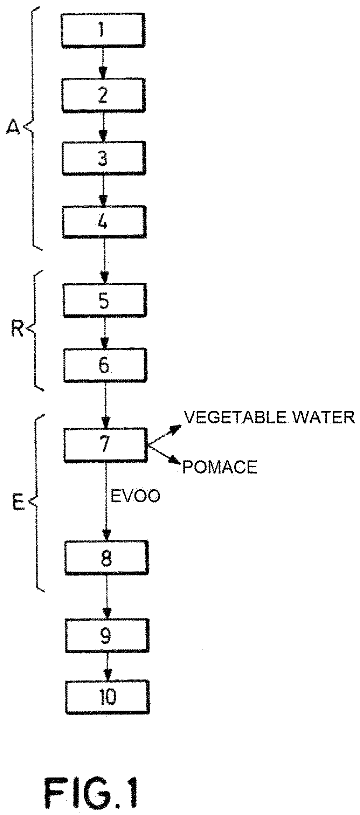

Figure 1 shows a schematic flow diagram of the anti-oxidative extraction method, wherein its main stages can be observed.

### PREFERRED EMBODIMENT OF THE INVENTION

What follows is a detailed explanation, with the help of the aforementioned figure, of a preferred exemplary embodiment of the object of the present invention.

The anti-oxidative olive oil extraction method, intended to prevent losses in the antioxidant content inherent to olives, comprises a plurality of successive stages. In a phase prior to said extraction method, a series of olive growing methods are executed with the aim of promoting and maintaining said antioxidant content in the fruits of the olive trees that will be used as raw materials, wherefrom olives with a high antioxidant content are obtained. Once said olives are harvested and transported to the mill, the anti-oxidative extraction method shown schematically in figure 1 is initiated less than three hours after the harvest.

The first stage of the method or conditioning stage (A) comprises the operations of selection (1), cleaning (2), washing (3) and drying (4) of the olives received at the mill. Said operations are jointly aimed at removing both olives in bad condition and harvesting waste, such as soil, stones, branches, leaves and other impurities that may negatively impact the quality of the oil obtained.

The olives are deposited on the surface of a vibrating table, which enables the separation of suspended fine particles by differences in specific gravity. During the selection (1), operators proceed to visually inspect the olives that vibrate on said table, manually removing those with external characteristics indicative of their bad condition, such as for example those in which blows or inadequate colour tone can be observed.

Once the apparently defective olives are removed, the rest are subjected to cleaning (2) by means of forced air currents generated by external fans, after which they are washed (3) by means of purified water jets from external containers, which fully remove the impurities adhered to the surface of the olives. Next, the clean olives are dried (4), once again by means of hot air jets, to remove the excess moisture from washing, thereby preventing unwanted fermentations and alterations.

The clean, dry olives are subjected to the second stage or reduction stage (R), which firstly comprises lamination or cutting (5), by means of high-precision blade cutters. Said cutting (5) gives rise to an olive paste in which the cell structure has broken, which will facilitate the extraction of the oil. Next, the olive paste thus obtained is subjected to moderate, quick heating (6) inside of vacuum-inertised heat exchangers. During this heating, the temperature is raised to 19-25ºC for a maximum of 10 minutes in order to reduce the viscosity of the paste, finish breaking the cell structure and coagulate the proteins, preventing the antioxidant content from being affected.

In the next stage, known as the extraction stage (E), the hot paste is introduced in a high-precision centrifuge or decanter in order to proceed to the separation (7) of the extra virgin olive oil (hereinafter, "EVOO") from the other components of the paste, which are pomaces and vegetable waters, which are considered by-products. Said separation (7), which occurs without external water addition, is based on the difference in density between the three elements of the olive paste (EVOO, pomace, vegetable water), which are subjected to centrifugation inside the decanter.

In order to purify the EVOO obtained after separation (7), removing the residual vegetable water from the olives, a double filtration (8) is performed by means of filter plates and Millipore-type filters. The preservation phase (9) of the suitably filtered EVOO is carried out in stainless steel isothermal tanks, inertised by addition of argon gas. Lastly, said EVOO is extracted from the tanks for packaging (10) thereof in stainless steel and/or aluminium containers with capacities of 100 to 200 mL.

The entire previously described method is automated and externally controlled by digital sensors connected to a touchscreen which enables the real-time supervision of each of the phases.

The oil obtained by means of this method has a minimum guaranteed antioxidant content of 6,000 mg/l. Within these antioxidants, the sum of biophenols and tocopherols represents approximately 15% of the total, the remaining 85% being the fraction corresponding to squalene.

## Claims

1. A method for the anti-oxidative extraction of olive oil, intended to prevent losses in the antioxidant content inherent to olives, **characterised in that** it comprises the following stages:
- conditioning (A), intended to remove both defective olives and impurities that interfere with the method, conditioning (A) which in turn comprises:
- selection (1) of olives, said olives being deposited on vibrator tables,
- cleaning (2) of the selected olives by means of forced air jets,
- washing (3) by means of purified water jets, and
- drying (4) by means of hot air jets, to remove excess moisture from washing,
- reduction (R), intended to transform the conditioned olives into a paste to facilitate oil extraction, reduction (R) which in turn comprises:
- cutting (5) of the olives to break their cell structure and give rise to a paste, and
- moderate heating (6) of the paste resulting from the cutting (5), wherein its temperature is raised to 19-25°C for a maximum of 600 seconds inside vacuum-inertised heat exchangers to reduce its viscosity and coagulate its proteins,
- extraction (E) which is initiated less than 3 hours after the harvest, wherein an extra virgin olive oil (EVOO) is obtained from the olive paste, a stage which in turn comprises:
- separation (7) of the EVOO from the other paste components inside a high-precision centrifuge, without addition of water, and
- filtration (8) of the EVOO resulting from the separation to remove the residual vegetable water content from the olives, wherein the filtration stage (8) of the EVOO comprises double filtration in two successive stages:
- a first stage by mean of plate filters, and
- a second stage by means of Millipore-type filters.
- preservation (9) of the extracted EVOO in inside isothermal tanks, made of stainless steel and interior inertised with argon gas, and
- packaging (10) inside stainless steel containers.

## Patentansprüche

1. Verfahren zur antioxidativen Extraktion von Olivenöl, das dafür vorgesehen ist, Verluste des den Oliven innewohnenden Gehalts an Antioxidantien zu verhindern, **dadurch gekennzeichnet, dass** es die folgenden Schritte umfasst:
- Konditionieren (A), das dafür vorgesehen ist, sowohl fehlerhafte Oliven als auch Verunreinigungen, die das Verfahren stören, zu entfernen, wobei das Konditionieren (A) seinerseits Folgendes umfasst:
- Auswählen (1) von Oliven, wobei die Oliven auf Rütteltischen abgelegt werden,
- Reinigen (2) der ausgewählten Oliven mithilfe von Druckluftstrahlen,
- Waschen (3) mithilfe von Strahlen gereinigten Wassers und
- Trocknen (4) mithilfe von Heißluftstrahlen, um überschüssige Feuchtigkeit aus dem Waschen zu entfernen,
- Reduzieren (R), das dafür vorgesehen ist, die konditionierten Oliven in einen Brei zu verwandeln, um die Ölextraktion zu erleichtern, wobei das Reduzieren (R) seinerseits Folgendes umfasst:
- Schneiden (5) der Oliven, um ihre Zellstruktur aufzubrechen und einen Brei zu erhalten, und
- mäßiges Erwärmen (6) des aus dem Schneiden (5) resultierenden Breis, bei dem seine Temperatur in vakuuminertisierten Wärmetauschern für maximal 600 Sekunden auf 19-25 °C erhöht wird, damit sich seine Viskosität verringert und seine Proteine koagulieren,
- Extrahieren (E), das weniger als 3 Stunden nach der Ernte eingeleitet wird, wobei aus dem Olivenbrei ein extra natives Olivenöl (*extra virgin olive oil -* EVOO) gewonnen wird, eine Stufe, die wiederum Folgendes umfasst:
- Trennen (7) des EVOO von den anderen Bestandteilen des Breis in einer Präzisionszentrifuge, ohne Zugabe von Wasser, und
- Filtrieren (8) des aus der Trennung resultierenden EVOO, um den Restgehalt an Pflanzenwasser aus den Oliven zu entfernen, wobei die Filtrationsstufe (8) des EVOO eine Doppelfiltration in zwei aufeinanderfolgenden Stufen umfasst:
- eine erste Stufe mithilfe von Plattenfiltern und
- eine zweite Stufe mithilfe von Filtern vom Millipore-Typ,
- Konservieren (9) des extrahierten EVOO in innen isothermen Behältern, die aus rostfreiem Stahl hergestellt sind und deren Inneres mit Argongas inertisiert ist, und
- Abpacken (10) in Behältern aus rostfreiem Stahl.

## Revendications

1. Procédé d'extraction antioxydante d'huile d'olive, destiné à éviter la perte de la teneur en antioxydants inhérente aux olives, **caractérisé en ce qu'**il comprend les étapes suivantes :
- le conditionnement (A), destiné à éliminer à la fois les olives défectueuses et les impuretés qui interfèrent avec le procédé, le conditionnement (A) comprenant à son tour :
- la sélection (1) des olives, lesdites olives étant déposées sur des tables vibrantes,
- le nettoyage (2) des olives sélectionnées au moyen de jets d'air forcé,
- le lavage (3) au moyen de jets d'eau purifiée, et
- le séchage (4) par jets d'air chaud, pour éliminer l'excès d'humidité du lavage,
- la réduction (R), destinée à transformer les olives conditionnées en une pâte pour faciliter l'extraction d'huile, la réduction (R) comprenant à son tour :
- le découpage (5) des olives pour briser leur structure cellulaire et donner naissance à une pâte, et
- le chauffage modéré (6) de la pâte résultant du découpage (5), dans lequel sa température est augmentée à 19 à 25 °C pendant un maximum de 600 secondes à l'intérieur d'échangeurs de chaleur sous vide pour réduire sa viscosité et coaguler ses protéines,
- l'extraction (E) qui est initiée moins de 3 heures après la récolte, dans lequel une huile d'olive extra vierge (HOEV) est obtenue à partir de la pâte d'olive, une phase qui comprend à son tour :
- la séparation (7) de l'HOEV des autres composants de la pâte à l'intérieur d'une centrifugeuse de haute précision, sans ajout d'eau, et
- la filtration (8) de l'HOEV résultant de la séparation pour éliminer la teneur en eau végétale résiduelle des olives, dans lequel la phase de filtration (8) de l'HOEV comprend une double filtration en deux phases successives :
- une première phase au moyen de filtres à plaques, et
- une seconde phase au moyen de filtres de type Millipore,
- la conservation (9) de l'HOEV extraite à l'intérieur de cuves isothermes, en acier inoxydable et l'intérieur étant rendu inerte par un gaz argon, et
- l'emballage (10) dans des conteneurs en acier inoxydable.
